# EUROPÄISCHE PATENTSCHRIFT

(11) **EP 3 004 796 B1**
(45) Veröffentlichungstag und Bekanntmachung des Hinweises auf die Patenterteilung: **22.03.2017**
(21) Anmeldenummer: 13725171.6
(22) Anmeldetag: 27.05.2013
(51) Int. Cl.: G01B 21/04, G01B 1/00

(54) **VORRICHTUNG UND VERFAHREN ZUR KALIBRIERUNG EINES KOORDINATENMESSGERÄTS**
DEVICE AND METHOD FOR CALIBRATING A COORDINATE-MEASURING DEVICE
DISPOSITIF ET PROCÉDÉ D'ÉTALONNAGE D'UN APPAREIL DE MESURE DE COORDONNÉES

(43) Veröffentlichungstag der Anmeldung: 13.04.2016
(73) Patentinhaber: Carl Zeiss Industrielle Messtechnik GmbH, 73447 Oberkochen (DE)
(72) Erfinder: HAVERKAMP, Nils, 73431 Aalen (DE)
(74) Vertreter: Ramrath, Lukas
(86) Internationale Anmeldenummer: PCT/EP2013/060876
(87) Internationale Veröffentlichungsnummer: WO 2014/191016

(56) Entgegenhaltungen:
- DE-B3-102008 024 808
- US-A1- 2004 141 187
- US-A1- 2012 151 988

## Beschreibung

Die Erfindung betrifft eine Vorrichtung sowie ein Verfahren zur Kalibrierung eines Koordinatenmessgeräts.

In der dimensionellen Messtechnik müssen für einen Einsatz eines Koordinatenmessgeräts Messfähigkeitsnachweise, insbesondere Genauigkeitsnachweise, erbracht werden. In der industriellen Messtechnik sind zu vermessende Messobjekte, beispielsweise Werkstücke, typischerweise dreidimensionale Körper. Für die taktile dreidimensionale Messtechnik mittels Koordinatenmessgeräten ist eine Kalibrierung z.B. in der DIN EN ISO 10360 beschrieben.

Neben der taktilen, also auf mechanischer Antastung beruhenden, Messtechnik existieren auch optische Messtechniken, bei denen ein Messobjekt optisch vermessen wird. Für diese optischen Messtechniken existieren im Mikrometer-Genauigkeitsbereich jedoch lediglich zweidimensionale Kalibriermethoden, die beispielsweise aus der Halbleiter-Industrie bekannt sind. Für optische Koordinatenmessgeräte weisen bekannte dreidimensionale Kalibriermethoden den Nachteil auf, dass insbesondere für dreidimensionale Vermessungen eine Rückführung der Ergebnisse auf gesetzliche Primärnormale nicht direkt, sondern meistens indirekt erfolgt.

Die US 2009/0161122 A1 offenbart einen Messkörper zur Verwendung in einem Verfahren zur Bewertung einer dreidimensionalen Messgenauigkeit eines Koordinatenmessgeräts. Der Messkörper weist eine Pyramidenform mit vier vertikalen Oberflächen, vier geneigten Oberflächen und einer ebenen oberen Oberfläche aus.

Die DE 10 2008 028 986 A1 betrifft eine Halteeinrichtung zum Halten eines Kalibrierkörpers zum Kalibrieren eines Messsensors eines Koordinatenmessgeräts. Die Halteeinrichtung weist eine Einstelleinrichtung auf, die ausgestaltet ist, durch Betätigung eines Benutzers, insbesondere durch Drehung eines drehbaren Teils, eine Ausrichtung des an der Halteeinrichtung gehaltenen Kalibrierkörpers einzustellen.

Die DE 10 2005 033 187 A1 offenbart ein Verfahren zum Kalibrieren einer Messanordnung, die mittels invasiver Strahlung Bilder von Messobjekten erzeugt. Weiter offenbart die Druckschrift ein Kalibrierobjekt zum Kalibrieren dieser Messanordnung, wobei das Kalibrierobjekt zumindest ein Kalibrierelement mit einer kugelförmigen Oberfläche und/oder ein Kalibrierelement, dessen Oberfläche zumindest einen Teil einer Kugeloberfläche bildet, aufweist.

Die DE 10 2005 026 022 A1 offenbart ein Koordinatenmessgerät mit einem ein zu messendes Objekt berührungslos antastenden optischen Sensor. Systematische Messfehler, die in ihrer Größe von der Winkelneigung zwischen Sensor-Messachse und Materialoberfläche abhängig sind, werden dadurch korrigiert, dass die Abweichung zuvor durch Messung eines Normals im Koordinatenmessgerät bei Bestimmung der Abweichung gespeichert wird, um anschließend beim Messen von Werkstücken mit dem Sensor korrigierend berücksichtigt zu werden. Weiter offenbart die Druckschrift ein Kugelnormal.

Die DE 197 20 821 A1 offenbart ein Kalibriernormal für berührend und berührungslos optisch arbeitende Taster, welches aus einem Körper mit einer oder mehreren Teiloberflächen besteht, wobei der Körper als auch seine Oberflächen aus einem festen Material gefertigt sind. Der Körper zeichnet sich dadurch aus, dass die Oberflächen des Körpers eine ausreichende Formstabilität und Abriebsfestigkeit aufweisen und dass zumindest das Material der Oberflächen des Körpers Strahlung, die von einem optischen Taster ausgehend auf den Körper trifft, weitgehend absorbiert, transmittiert bzw. nur schwach reflektiert.

Die DE 10 2005 018 447 A1 offenbart das Messen eines Objekts mit einem Koordinatenmessgerät, wobei Messungen mittels einer taktilen und/oder optischen Sensorik durchgeführt werden können. Weiter offenbart die Druckschrift, dass beim Tomographievorgang grundsätzlich ein Kalibrierkörper, insbesondere eine Anordnung von Kugeln, mit tomographiert wird und hieraus die Relativlage der Drehachse zum Koordinatenmessgerät und/oder zur Röntgenquelle und/oder zum Röntgensensor bestimmt und anschließend mathematisch korrigiert wird.

Die US 2004/141187 A1 offenbart ein Kalibrierungsverfahren zur Bestimmung der Starrkörperkoordinatentransformation, die den Koordinatenrahmen eines Laserscanners exakt mit den Koordinatenrahmen von verschiedenen Bewegungsachsen ausrichtet.

Die US2012/151988 A1 offenbart als ein Kalibrierungsmuster einen länglichen Körper, welcher im Wesentlichen vollständig aus keramischem Material hergestellt ist und eine Richtung der Längserstreckung aufweist. Eine Vielzahl von Messelementen, die das Keramikmaterial umfassen, sind einstückig mit dem länglichen Körper ausgebildet, wobei jedes Messelement eine erste ebene Messfläche aufweist, die in eine erste Richtung orientiert ist.

Die DE 10 2008 024 808 B3 offenbart ein Geometrienormal, insbesondere ein Millimeterbereich-Längennormal, das eine erste Platte, die eine Erstplatten-Ausnehmung aufweist, die von einem Erstplatten-Rand begrenzt ist, und zumindest eine zweite Platte, die mit der ersten Platte verbunden ist, umfasst.

Es stellt sich das technische Problem, ein Verfahren und eine Vorrichtung zum Kalibrieren eines Koordinatenmessgeräts, insbesondere eines Koordinatenmessgeräts mit mindestens einem optischen und mindestens einem taktilen Sensor, zu schaffen, welche eine zuverlässige und hochgenaue Kalibrierung des Koordinatenmessgeräts ermöglichen.

Die Lösung des technischen Problems ergibt sich durch die Gegenstände mit den Merkmalen der Ansprüche 1 und 12. Weitere vorteilhafte Ausgestaltungen der Erfindung ergeben sich aus den Unteransprüchen.

Es ist eine Grundidee der Erfindung, eine Vorrichtung zur Kalibrierung eines Koordinatenmessgeräts zu schaffen, welche für eine Vielzahl von optischen Sensoren und Beleuchtungsszenarien eine hochgenaue optische Vermessung ermöglicht, insbesondere eine hochgenaue und eindeutige bildbasierte Merkmalsdetektion.

Vorgeschlagen wird eine Vorrichtung zur Kalibrierung eines Koordinatenmessgeräts. Das Koordinatenmessgerät kann insbesondere ein sogenanntes Multisensor-Koordinatenmessgerät sein, welches eine dreidimensionale Vermessung eines Messobjekts mittels mindestens eines optischen Sensors und eines taktilen Sensors ermöglicht.

Bei einer Vermessung des Messobjekts durch einen taktilen Sensor werden Koordinaten des Messobjekts durch eine Antastung von Oberflächen des Messobjekts mittels des taktilen Sensors, beispielsweise eines Tastelements, insbesondere einer Tastkugel, das Teil eines Tastkopfes sein kann, bestimmt. Bei einer optischen Vermessung des Messobjekts werden durch einen optischen Sensor Abbilder des Messobjekts erzeugt, wobei durch Methoden der Bildverarbeitung eine Vermessung, d.h. die Bestimmung von Abmaßen, erfolgt. Hierbei können geeignete Bildmerkmale detektiert und ausgewertet werden.

Die Vorrichtung umfasst mindestens ein Kalibrierelement. Ein Kalibrierelement bezeichnet hierbei ein Element mit vorbekannten geometrischen Abmaßen. Vorzugsweise ist das Kalibrierelement auf ein gesetzliches Primärnormal zurückgeführt, d.h. geeicht.

Das Kalibrierelement weist mehrere Oberflächenabschnitte auf, wobei aneinander anstoßenden Oberflächenabschnitte eine Kante ausbilden. Beim Übergang von aneinander anstoßende Oberflächenabschnitten erfolgt an der Kante eine sprunghafte Änderung eines Normalenvektors, wobei der Normalenvektor orthogonal zu dem jeweiligen Oberflächenabschnitt orientiert ist. Somit weist insbesondere ein kugelförmiges Kalibrierelement keine Kanten auf.

Vorzugsweise umfasst das Kalibrierelement mehrere ebene, insbesondere ausschließlich ebene, Oberflächenabschnitte. Diese Oberflächenabschnitte können z.B. Seitenflächen des Kalibrierelements ausbilden.

Erfindungsgemäß umfasst die Vorrichtung mindestens eine Haltevorrichtung, wobei das Kalibrierelement auf einem Oberflächenabschnitt der Haltevorrichtung angeordnet ist. Insbesondere ist das Kalibrierelement auf einem ebenen Oberflächenabschnitt der Haltevorrichtung angeordnet. Somit ist es möglich, dass ein ebener Oberflächenabschnitt des Kalibrierelements auf einem ebenen Oberflächenabschnitt der Haltevorrichtung angeordnet ist. Das Kalibrierelement und die Haltevorrichtung können hierbei mechanisch lösbar oder unlösbar verbunden sein. Beispielsweise können das Kalibrierelement und die Haltevorrichtung verklebt sein. Jedoch sind selbstverständlich auch weitere mechanische Verbindungsarten vorstellbar.

Weiter sind die Oberflächenabschnitte des Kalibrierelements derart zueinander angeordnet, dass das Kalibrierelement mindestens eine Kante aufweist, welche sich mit keiner weiteren Kante des Kalibrierelements überlagert, wenn die Kanten des Kalibrierelements in eine gemeinsame Projektionsebene projiziert werden. Hierbei ist die Projektionsebene orthogonal zu einem Normalenvektor des Oberflächenabschnitts der Haltevorrichtung orientiert. Ist der Oberflächenabschnitt der Haltevorrichtung, auf dem das Kalibrierelement angeordnet ist, ein ebener Oberflächenabschnitt, so bezeichnet der Normalenvektor einen Normalenvektor dieses ebenen Oberflächenabschnitts. Ist jedoch der Oberflächenabschnitt der Haltevorrichtung, auf dem das Kalibrierelement angeordnet ist, z.B. ein gekrümmter Oberflächenabschnitt, so kann der Normalenvektor einen Normalenvektor einer Tangentialebene an einem Punkt oder einer Gerade bezeichnen, an dem/an der das Kalibrierelement mit der Haltevorrichtung verbunden ist.

Durch die erfindungsgemäße Anordnung und Ausbildung des Kalibrierelements ergibt sich, dass die mindestens eine Kante in der Projektionsebene eindeutig identifizierbar ist, da ihr keine weitere Kante überlagert ist. Entspricht die Projektionsebene beispielsweise einer Bildebene eines optischen Sensors, so wird die mindestens eine Kante eindeutig in die Bildebene abgebildet.

Der Begriff "überlagern" bedeutet hierbei, dass zumindest Teilabschnitte zweier Kanten mit gleicher Lage und Orientierung in die gemeinsame Projektionsebene projiziert werden. Insbesondere bedeutet "überlagern", dass sich die Lagen und Orientierungen von Teilabschnitten von Kanten in der gemeinsamen Projektionsebene derart entsprechen, dass Endpunkte und/oder ein Verlauf einer bestimmten Kante in der Projektsebene nicht eindeutig detektierbar bzw. identifizierbar ist/sind. Die Teilabschnitte können hierbei eine vorbestimmte Länge aufweisen. Der Begriff Teilabschnitt bezeichnet nicht unbedingt einen Punkt einer Kante. So kann es z.B. unschädlich sein, wenn sich Kanten in der Projektionsebene in einem Punkt schneiden.

Die Projektion bezeichnet hierbei eine Parallelprojektion, deren Projektionsrichtung parallel zu dem vorhergehend erläuterten Normalenvektor orientiert ist. Insbesondere kann das Kalibrierelement derart ausgebildet und auf der Haltevorrichtung angeordnet sein, dass sich eine vorbestimmte Anzahl oder sogar alle Kanten, an der mindestens zwei Oberflächenabschnitte des Kalibrierelements zusammenstoßen, in der gemeinsamen Projektionsebene nicht überlagern. Selbstverständlich kann, wie nachfolgend noch näher erläutert, auch die Haltevorrichtung derart ausgebildet sein, dass sich in der gemeinsamen Projektionsebene keine der Kante der Haltevorrichtung mit mindestens einer Kante des Kalibrierelements überlagern.

Dass sich die Kante mit keiner weiteren Kante überlagert bedeutet somit auch, dass die Kante in der Projektionsebene eindeutig identifizierbar ist, insbesondere ihre Lage und Orientierung.

Erfindungsgemäß weist die Haltevorrichtung mindestens eine Öffnung auf, welche hin zu einer Oberseite und hin zu einer Unterseite der Haltevorrichtung geöffnet ist, wobei das mindestens eine Kalibrierelement zumindest teilweise über der Öffnung angeordnet ist. Die Öffnung ist somit eine Durchgangsöffnung, d.h. keine Sackloch-Öffnung.

Dass das mindestens eine Kalibrierelement zumindest teilweise über der Öffnung angeordnet ist, bedeutet, dass Licht, welches durch die Öffnung tritt, auf das Kalibrierelement fällt. Insbesondere kann eine Zentralachse der Öffnung, die sich zwischen beiden Enden der Öffnung streckt, parallel zu dem vorhergehend erläuterten Normalenvektor orientiert sein.

In anderen Worten bedeutet die Anordnung des Kalibrierelements über der Öffnung, dass sich die in die gemeinsame Projektionsebene projizierte Öffnung und das in die gemeinsame Projektionsebene projizierte Kalibrierelement in der gemeinsamen Projektionsebene zumindest teilweise überlappen.

Insbesondere kann mindestens eine Kante oder ein Teilabschnitt einer Kante des Kalibrierelements über der Öffnung angeordnet sein.

Das Vorsehen einer Öffnung in der Haltevorrichtung sowie die entsprechende Anordnung des Kalibrierelements ermöglicht in vorteilhafter Weise die Verwendung von Auflicht und Durchlicht zur Erzeugung eines Abbildes des Kalibrierelements. Hierbei bezeichnet Durchlicht Licht, welches von einer der Bildebene des Bildsensors abgewandten Seite der Haltevorrichtung durch die Öffnung hindurch auf die Bildebene fällt. Entsprechend bedeutet Auflicht Licht, welches von einer der Bildebene zugewandten Seite der Haltevorrichtung auf die Haltevorrichtung und das Kalibrierelement fällt.

Somit kann mittels der vorgeschlagenen Vorrichtung ein optischer Sensor sowohl in einem Auflicht-Beleuchtungsszenario als auch in einem Durchlicht-Beleuchtungsszenario kalibriert werden.

Die vorgeschlagene Ausbildung und Anordnung des Kalibrierelements und der Haltevorrichtung ermöglicht in vorteilhafter Weise eine eindeutige Abbildung insbesondere von Kanten des Kalibrierelements. Somit kann insbesondere eine auf einer Kantendetektion basierende optische Vermessung des Kalibrierelements verbessert werden. Da Kanten Oberflächenabschnitte begrenzen und Abmaße dieser Oberflächenabschnitte des Kalibrierelements bekannt sind, kann auf dieser Grundlage ein Zusammenhang, beispielsweise ein Umrechnungsfaktor, zwischen einem bildbasierten, beispielsweise bildpunktbasierten, Abmaß des Oberflächenabschnitts und einem tatsächlichen Abmaß des Oberflächenabschnitts bestimmt werden.

Dieser Zusammenhang ermöglicht dann die Kalibrierung des optischen Sensors, da eine hochgenaue Zuordnung von bildbasiert bestimmten Abmaßen zu tatsächlichen Abmaßen ermöglicht wird. Somit ermöglicht die vorgeschlagene Vorrichtung eine hohe Messgenauigkeit bei einer optischen Vermessung.

In einer weiteren Ausführungsform schneiden sich zwei voneinander verschiedene Oberflächenabschnitte, insbesondere ebene Oberflächenabschnitte, unter einem spitzen Winkel. Der spitze Winkel bezeichnet hierbei den von den Oberflächenabschnitten eingeschlossenen Winkel im Inneren oder im Innenvolumen des Kalibrierelements. Verläuft der vorhergehend erläuterte Normalenvektor parallel zu einem Normalenvektor einer dieser Oberflächenabschnitte, so ergibt sich in vorteilhafter Weise, dass die von den beiden beschriebenen Oberflächenabschnitten gebildete Kante eindeutig in die gemeinsame Projektionsebene projiziert wird. Die eindeutige Projektion kann insbesondere dann nicht gegeben sein, falls sich die Oberflächenabschnitte unter einem rechten Winkel schneiden und der Normalenvektor parallel zu einem der Oberflächenabschnitte orientiert ist. Insbesondere können sich mehrere oder sogar alle Oberflächenabschnitte des Kalibrierelements unter einem spitzen Winkel schneiden. Z.B. kann das Kalibrierelement tetraederförmig ausgebildet sein.

In einer bevorzugten Ausführungsform liegt der spitze Winkel in einem Winkelbereich von 0° bis kleiner 90°. Somit ist der Winkel größer als 0° und kleiner als 90°. Vorzugsweise liegt der Winkel nahe an 90°, beispielsweise kann er größer als 80° oder größer als 85°sein.

Dies ist vorteilhaft, da keine zu starke Hinterschneidung benötigt wird, welche materialbedingt schwierig zu fertigen sein kann. Auch werden durch nicht zu starke Hinterschneidungen so genannten Schaftantastungen bei einer taktilen Vermessung der entsprechenden Oberflächenabschnitte vermieden. Somit wird in vorteilhafter Weise eine während der taktilen Vermessung eventuell benötigtes Verschwenken eines Tastkopfes bzw. eines Tastelements, z.B. einer Tastkugel, vermieden.

Da eine Kante, die von zwei senkrecht zueinander orientierten Ebenen gebildet wird, sehr gut bildbasiert bestimmt werden kann, ergibt sich hierdurch in vorteilhafter Weise eine möglichst gute bildbasierte Bestimmbarkeit der Kante, während, wie vorhergehend erläutert, gleichzeitig eine eindeutige Bestimmbarkeit gewährleistet wird.

In einer weiteren bevorzugten Ausführungsform ist das Kalibrierelement pyramidenstumpfförmig ausgebildet. Das Kalibrierelement kann hierbei eine dreieckige oder viereckige oder auch mehr als viereckige Grundfläche aufweisen. Insbesondere ist es möglich, dass das pyramidenstumpfförmige Kalibrierelement derart an der Haltevorrichtung angeordnet ist, dass sich eine Querschnittsfläche des Kalibrierelements in der Richtung des vorhergehend erläuterten Normalenvektors vergrößert, wobei die Querschnittsfläche orthogonal zum Normalenvektor orientiert ist. Somit kann die Grundfläche des pyramidenstumpfförmigen Kalibrierelements eine in Normalenrichtung obere Oberfläche des Kalibrierelements ausbilden.

Dies ermöglicht in vorteilhafter Weise eine möglichst einfache mechanische Fertigung des Kalibrierelements.

Weiter kann das Kalibrierelement vorbekannte optische Eigenschaften aufweisen. Die optischen Eigenschaften des Kalibrierelements umfassen hierbei einen Teil oder vorzugsweise alle Eigenschaften des Kalibrierelements, durch welche dieses mit elektromagnetischer Strahlung, insbesondere Licht, in Wechselwirkung tritt. Optische Eigenschaften können beispielsweise auch Struktureigenschaften des Kalibrierelements oder abhängig von diesen Struktureigenschaften sein.

Die vorbekannten optischen Eigenschaften ermöglichen eine rechnerische Bestimmung der Wechselwirkung des Kalibrierelements mit Licht. Somit kann in Kenntnis der vorbekannten optischen Eigenschaften ein virtuelles Abbild des Kalibrierelements berechnet, d.h. simuliert, werden.

Insbesondere ermöglichen die optischen Eigenschaften eine Simulation elektromagnetischer Wechselwirkungen zwischen dem Kalibrierelement und elektromagnetischer Strahlung. Hierdurch kann in vorteilhafter Weise eine sogenannte rigorose optische Simulation durchgeführt werden.

Optische Eigenschaften ergeben sich hierbei z. B. aus strukturellen Eigenschaften und einem geometrischen Aufbau. Somit können sich optische Eigenschaften insbesondere aus einem Material oder einer Materialzusammensetzung, einer Oberflächenbeschaffenheit, einer Oberflächengüte, einer Oberflächentopographie, einer elektrischen Leitfähigkeit und weiteren Eigenschaften des Kalibrierelements ergeben. Weitere Eigenschaften, die optische Eigenschaften beeinflussen, können z.B. Absorptionseigenschaften, Reflektionseigenschaften, eine Brechzahl, eine Homogenität des Materials und/oder der Materialeigenschaften und eine Isotropie des Materials und/oder der Materialeigenschaften umfassen.

Weiter können Streueigenschaften und/oder Beugungseigenschaften und/oder Reflektionseigenschaften und/oder Transmissionseigenschaften des Kalibrierelements vorbekannt sein. Diese zählen hierbei zu den vorhergehend erläuterten optischen Eigenschaften des Kalibrierelements. Die vorgenannten Eigenschaften können hierbei beispielsweise in Abhängigkeit eines Materials oder einer Materialzusammensetzung des Kalibrierelements bestimmt werden.
Für eine Simulation der Ausbreitung einer elektromagnetischen Welle, z.B. für die Simulation einer Transmission, kann eine Berücksichtigung des orts- und richtungsabhängigen sowie wellenlängenabhängigen komplexen Brechungsindex mit wellenlängenabhängigem Realteil und wellenlängenabhängigem Imaginärteil erfolgen.

Dieser Ansatz erlaubt in vorteilhafter Weise eine möglichst vollständige Berücksichtigung von Fertigungs-, Montage-, Umgebungs- und Betriebseinflüssen, z.B. von, aber nicht beschränkt auf, Temperatur, Luftfeuchtigkeit, Luftdruck und Spannungseinträge in das Material.

Ein geeignet gewähltes Material kann die vorhergehend erläuterte Simulation vereinfachen. Beispielsweise entfällt für homogene Materialien die Ortsabhängigkeit des Brechnungsindex. Für isotrope Materialien entfällt beispielsweise die Richtungsabhängigkeit.

Die vorgenannten Eigenschaften ermöglichen in vorteilhafter Weise eine möglichst genaue Berechnung der Wechselwirkung des Kalibrierelements mit elektromagnetischer Strahlung, insbesondere Licht.

Weiter kann das Kalibrierelement aus einem isotropen Material bestehen.

Dies ermöglicht eine möglichst einfache Berechnung der Wechselwirkung des Kalibrierelements mit elektromagnetischer Strahlung, insbesondere mit Licht.

Es ist selbstverständlich auch möglich, dass das Kalibrierelement aus anisotropem Material oder anisotroper Materialzusammensetzung besteht. In diesem Fall ist vorzugsweise die Abhängigkeit einer Eigenschaft von der Richtung vorbekannt. Die Eigenschaft, auf die sich die Isotropie oder Anisotropie bezieht, kann insbesondere eine optische Eigenschaft sein.

Weiter kann das Kalibrierelement aus nicht-leitfähigem Material bestehen. Dies schließt auch Materialien mit geringer Leitfähigkeit ein. Beispielsweise kann das Kalibrierelement als Nichtleiter oder Isolator mit einer Leitfähigkeit kleiner als 10⁻⁸ Sm ausgebildet sein.

Ein solches Kalibrierelement ermöglicht in vorteilhafter Weise eine vereinfachte Berechnung der Wechselwirkungen des Kalibrierelements mit elektromagnetischer Strahlung, insbesondere mit Licht.

Die Erzeugung oder Simulation von virtuellen Abbildern des Kalibrierelements ermöglicht in vorteilhafter Weise die Optimierung der bildbasierten Vermessung. So können durch die Simulation Abbildungseffekte simuliert werden, die bei der tatsächlichen optischen Abbildung die bildbasierte Vermessung erschweren. In Kenntnis der simulierten Abbildungseffekte kann dann die Genauigkeit der bildbasierten Vermessung erhöht werden, da aufgrund dieser Abbildungseffekte auftretende Messungenauigkeiten kompensiert werden können.

Weiter kann das Kalibrierelement eine vorbestimmte mechanische Härte aufweisen. Hierbei bezeichnet die Härte einen mechanischen Widerstand, den das Kalibrierelement der mechanischen Eindringung eines härteren Prüfkörpers entgegensetzt. Beispielsweise kann das Kalibrierelement derart ausgebildet sein, dass Verformungen des Kalibrierelements durch Antastung mit einer Kraft, die kleiner als oder gleich einer maximalen Kraft ist, vollständig reversibel sind. Selbstverständlich kann das Kalibrierelement auch derart ausgebildet sein, dass Verformungen des Kalibrierelements durch Antastung mit einem Druck, der kleiner als oder gleich einem maximalen Druck ist, vollständig reversibel sind. Somit erfolgt also bei einer Beaufschlagung des Kalibrierelements mit solchen Kräften/Drücken eine ausschließlich reversible Verformung des Kalibrierelements.

Selbstverständlich kann auch die vorgeschlagene Vorrichtung, die das Kalibrierelement und die Haltevorrichtung umfasst, die hohe mechanische Härte aufweisen. Insbesondere kann die Vorrichtung derart ausgebildet sein, dass sich keine oder nur eine reversible Lageänderung zwischen Kalibrierelement und Haltevorrichtung bei der Beaufschlagung mit den vorhergehend erläuterten Kräften/Drücken ergibt.

Alternativ oder kumulativ kann das Kalibrierelement eine vorbestimmte mechanische Festigkeit aufweisen. Die mechanische Festigkeit beschreibt hierbei einen mechanischen Widerstand, den das Kalibrierelement einer plastischen Verformung oder Trennung entgegensetzt. Insbesondere kann das Kalibrierelement eine vorbestimmte Druckfestigkeit aufweisen.

Weiter alternativ oder kumulativ kann das Kalibrierelement eine vorbestimmte mechanische Verschleißfestigkeit aufweisen. Die Verschleißfestigkeit bezeichnet hierbei einen Widerstand des Kalibrierelements gegenüber einem mechanischen Abrieb. Beispielsweise kann das Kalibrierelement derart ausgebildet sein, dass bei einer Antastung mit einer Kraft, die kleiner als oder gleich einer maximalen Kraft ist, kein oder nur ein minimaler mechanischer Abrieb erfolgt. Entsprechendes gilt für die Antastung mit einem Druck, der kleiner als oder gleich einem maximalen Druck ist.

Beispielsweise kann das Kalibrierelement zumindest teilweise aus Quarzglas, Zerodur, Silizium, Karbid, Nitrid oder einer technischen Oxid-Keramik bestehen.

Bevorzugt kann das Kalibrierelement aus Diamant bestehen. Diamant weist in vorteilhafter Weise eine hohe mechanische Härte, eine hohe mechanische Festigkeit, eine hohe mechanische Verschleißfestigkeit, eine genaue Bearbeitbarkeit, einen niedrigen thermischen Ausdehnungskoeffizienten sowie genau bekannte optische Eigenschaften auf.

Ein weiterer Vorteil der Ausbildung des Kalibrierelements aus Diamant ist die chemische und physikalische Reinheit des Diamanten. Vorzugsweise wird daher das Kalibrierelement aus einem künstlichen MCVD-Diamant (Modified Chemical Vapor Deposition - Diamant) oder aus einem AAA-Diamant oder aus einem natürlichen Diamanten der höchsten Werkzeug-Qualitäts- oder sogar Schmuck-Qualitätsstufe ausgebildet. Ein AAA-Diamant bezeichnet hierbei einen künstlichen Diamanten der höchsten Qualitätsstufe.

Ein Diamant stellt hierbei ein homogenes, hochreines und monokristallines Material bereit, welches für eine physikalisch-optische Simulation am besten geeignet ist, da es physikalisch-chemisch leicht zu beschreiben ist und nur geringste Störungen aufweist. Dreidimensionale Materialmischungen, Schichtsysteme oder Legierungen können im Vergleich hierzu nur mit größerer Unsicherheit im Rahmen der vorhergehend erläuterten rigorosen Optiksimulation simuliert werden.

Auch kann das Kalibrierelement einen vorbestimmten thermischen Ausdehnungskoeffizienten aufweisen. Der thermische Ausdehnungskoeffizient kann insbesondere kleiner als ein vorbestimmter (geringer) thermischer Ausdehnungskoeffizient sein. Dies ermöglicht in vorteilhafter Weise, dass sich geometrische Abmaße des Kalibrierelements unter Temperatureinfluss möglichst wenig ändern.

Alternativ oder kumulativ besteht das Kalibrierelement aus Hartmetall. Weiter alternativ oder kumulativ besteht das Kalibrierelement aus einer technischen Keramik, insbesondere einem Karbid. Auch diese weisen in vorteilhafter Weise eine hohe mechanische Festigkeit und Verschleißfestigkeit auf.

Für diese vorgenannten Materialien existieren Bearbeitungsverfahren, die eine Herstellung eines Körpers mit hochgenau bestimmbaren Abmaßen ermöglichen. Beispielsweise können bei der Verwendung von Diamant und Hartmetallen Formabweichungen und Oberflächengüten im Bereich von 10 bis 100 nm erreicht werden, teilweise sogar im Bereich unterhalb von 10 nm. Derartige Genauigkeiten können notwendig sein, um bei Ausgleichselement-Berechnungen, wie sie in der dimensionellen Messtechnik und deren Kalibrierung regelmäßig durchgeführt werden, Stabilitäten und Unsicherheiten im Bereich unterhalb von 10 nm zu ermöglichen.

Die vorgeschlagenen Materialien ermöglichen in vorteilhafter Weise die Verwendung der erfindungsgemäßen Vorrichtung auch zur Kalibrierung eines taktilen Sensors. Insbesondere ist gewährleistet, dass sich geometrische Abmaße durch die Antastung z.B. mittels eines Tastelements nicht oder nur minimal ändern. Beispielsweise treten somit bei Tastkräften keine Flächenpressungen auf, die zu plastischen Verformungen einer Oberfläche des Kalibrierelements führen können.

In einer weiter bevorzugten Ausführungsform weist die Haltevorrichtung mehrere Öffnungen auf, wobei das mindestens eine Kalibrierelement zumindest teilweise über mehr als einer der Öffnungen angeordnet ist. Insbesondere können mehrere Kanten oder Teilabschnitte mehrerer Kanten des Kalibrierelements zumindest teilweise über den Öffnungen angeordnet sein.

Wie vorhergehend erläutert kann dies bedeuten, dass in der gemeinsamen Projektionsebene die Kanten des Kalibrierelements zumindest teilweise im Bereich der projizierten Öffnung angeordnet sind.

Hierdurch kann mehr als eine Kante sowohl in einem Auflicht- als auch in einem Durchlicht-Beleuchtungsszenario abgebildet werden. Hierdurch wird in vorteilhafter Weise die Kalibrierung in solchen Beleuchtungsszenarien weiter verbessert.

Die mindestens eine Öffnung kann verschiedene Geometrien aufweisen. Die Öffnung kann beispielsweise einen kreisförmigen oder einen polygonalen Querschnitt aufweisen.

In einer weiteren Ausführungsform weist die Haltevorrichtung einen Grundkörper und mindestens einen Halteblock auf, wobei der Halteblock über mindestens einen freigeschnittenen Haltesteg mit dem Grundkörper verbunden ist. Freigeschnitten bedeutet hierbei, dass zumindest in einem Abschnitt des Haltestegs dieser Haltesteg beidseitig eine Öffnung begrenzt oder in einer Öffnung angeordnet ist, beispielsweise in diese Öffnung hineinragt. Der Haltesteg bezeichnet somit einen Abschnitt der Haltevorrichtung, der beidseitig durch eine oder mehrere Öffnungen begrenzt ist. Somit sind zu beiden Seiten des zumindest einen Abschnitts des Haltestegs eine oder mehrere Öffnungen angeordnet.

Das Kalibrierelement kann auf dem Halteblock der Haltevorrichtung angeordnet sein. Hierbei kann der Halteblock bei der Projektion in die gemeinsame Projektionsebene geringere äußere Abmaße aufweisen als minimale oder maximale räumliche Abmaße des in die gemeinsame Projektionsebene projizierten Kalibrierelements.

Durch die Ausbildung von Haltestegen ergibt sich in vorteilhafter Weise eine möglichst einfache Anfertigung der Haltevorrichtung derart, dass eine stabile Halterung des Kalibrierelements möglich ist, jedoch gleichzeitig die vorhergehend erläuterte Anordnung zumindest eines Teils des Kalibrierelements über einer oder mehrerer Öffnungen der Haltevorrichtung gewährleistet ist.

Auch der Halteblock kann eine Öffnung aufweisen, beispielsweise eine zentrale Öffnung. In diesem Fall kann das Kalibrierelement auch über dieser Öffnung des Halteblocks angeordnet sein.

In einer weiteren Ausführungsform ist eine Ecke oder eine Kante des Kalibrierelements über dem mindestens einen Haltesteg angeordnet. Eine Ecke bezeichnet hierbei einen Schnittpunkt zweier oder mehrerer Kanten des Kalibrierelements.

Entsprechend den vorhergehenden Ausführungen bedeutet der Begriff "über", dass die in die gemeinsame Projektionsebene projizierte Kante oder Ecke des Kalibrierelements innerhalb des in die gemeinsame Projektionsebene projizierten Steges oder auf einem Rand des in die gemeinsame Projektionsebene projizierten Steges angeordnet ist.

Dies bedeutet, dass in einem Durchlicht-Beleuchtungsszenario die Ecke oder die Kante des Kalibrierelements durch den mindestens einen Steg verdeckt ist.

Ist eine Ecke über dem mindestens einen Steg angeordnet, so können zumindest Teilabschnitte von zwei Kanten des Kalibrierelements durch den Steg verdeckt sein. Allerdings ergibt sich in diesem Fall eine stabile mechanische Lagerung des Kalibrierelements auf der Haltevorrichtung.

Ist ausschließlich eine Kante und keine Ecke über dem Steg angeordnet, so kann mindestens eine von dieser Kante gebildete Ecke über einer Öffnung der Haltevorrichtung angeordnet sein. Somit ist in diesem Fall die Kante in einem Durchlicht-Beleuchtungsszenario in vorteilhafter Weise gut abbildbar. Da eine abgebildete Ecke ein bildbasiert einfach, genau und robust zu bestimmendes Merkmal darstellt, kann hierdurch in vorteilhafter Weise die Bestimmung optischer Abmaße verbessert werden.

In einer weiteren Ausführungsform weist die Haltevorrichtung mindestens eine Kante auf, wobei die in die gemeinsame Projektionsebene projizierte Kante sich mit keiner weiteren in die Projektionsebene projizierten Kante der Haltevorrichtung überlagert. Zusätzlich ist es selbstverständlich möglich, dass sich die in die gemeinsame Projektionsebene projizierte Kante der Haltevorrichtung mit keiner der in die gemeinsame Projektionsebene projizierten Kante des Kalibrierelements überlagert.

Hierdurch ergibt sich in vorteilhafter Weise, dass auch Kanten der Haltevorrichtung bildbasiert eindeutig identifiziert werden können. Hierdurch kann eine optische Vermessung verbessert werden, da z.B. mittels Verfahren der Kantendetektion auch Kanten der Haltevorrichtung detektierbar und zur Bestimmung von bildbasierten Abmaßen verwendbar sind.

Weiter kann die mindestens eine Kante eine die mindestens eine Öffnung begrenzende Kante sein. Hierdurch ergibt sich in vorteilhafter Weise, dass die mindestens eine Kante sowohl in einem Durchlicht- als auch in einem Auflicht-Beleuchtungsszenario eindeutig abbildbar ist.

Entsprechend der Ausbildung des Kalibrierelements ist es möglich, dass die Kante von zwei ebenen Oberflächenabschnitten der Haltevorrichtung ausgebildet wird, die sich unter einem spitzen Winkel schneiden, insbesondere einen Winkel aus dem vorhergehend angeführten Winkelbereich von 0° bis kleiner 90°.

In einer weiteren Ausführungsform weist die Haltevorrichtung mehrere zueinander parallele ebene Oberflächenabschnitte auf, die entlang des Normalenvektors mit einem vorbestimmten Abstand beabstandet zueinander angeordnet sind. Auf einem dieser ebenen Oberflächenabschnitte kann hierbei das Kalibrierelement angeordnet sein. Hierdurch ergibt sich in vorteilhafter Weise, dass diese ebenen Oberflächenabschnitte sowohl optisch als auch taktil vermessen werden können, wobei tatsächliche räumliche Abstände dieser Oberflächenabschnitte vorbekannt sind.

Generell kann auch die Haltevorrichtung vorbekannte geometrische Abmaße aufweisen. Beispielsweise können die Öffnungen in der Haltevorrichtung vorbekannte Abmaße, z.B. Durchmesser, aufweisen. Somit kann auch die Haltevorrichtung zum Kalibrieren des Koordinatenmessgeräts verwendet werden, insbesondere zum Kalibrieren eines taktilen Sensors des Koordinatenmessgeräts.

In einer weiteren Ausführungsform umfasst die Vorrichtung mindestens ein weiteres Kalibrierelement. Dieses kann gleichartig zum ersten Kalibrierelement ausgebildet sein. Insbesondere kann das weitere Kalibrierelement die gleichen geometrischen und physikalisch-optischen Eigenschaften wie das erste Kalibrierelement aufweisen.

Das weitere Kalibrierelement kann hierbei auf einem weiteren Oberflächenabschnitt der Haltevorrichtung angeordnet sein. Hierbei kann das weitere Kalibrierelement mit einem vorbestimmten Abstand zum ersten Kalibrierelement auf der Haltevorrichtung angeordnet sein. Hierdurch kann zwischen den Kalibrierelementen ein Luftspalt mit vorbekannten Abmaßen angeordnet sein. Somit schließen die Kalibrierelemente eine "eingelassene" Struktur ein, die sowohl optisch als auch taktil vermessen werden kann.

In Bezug auf den Oberflächenabschnitt der Haltevorrichtung, auf dem das/die Kalibrierelement(e) angeordnet ist/sind, bildet/bilden das/die Kalibrierelement(e) jeweils eine erhabene Struktur, die ebenfalls optisch und taktil vermessen werden kann.

Dies ermöglicht in vorteilhafter Weise eine Kalibrierung für die Messung von Innen- und Außenmaßen entsprechend einer bekannten Vermessung von Lehrringen oder Lehrdornen.

Weiter kann die Vorrichtung mindestens ein weiteres Kalibrierelement umfassen, wobei das weitere Kalibrierelement ein zumindest teilweise kugelförmiges Teilelement aufweist.

Beispielsweise kann das weitere Kalibrierelement als kugelförmiges Kalibriernormal ausgebildet sein. Dies ermöglicht in vorteilhafter Weise die Anwendung bekannter Kalibrierverfahren für die Kalibrierung eines insbesondere taktilen Sensors des Koordinatenmessgeräts.

Weiter kann die Vorrichtung mindestens ein weiteres Kalibrierelement umfassen, wobei das mindestens eine weitere Kalibrierelement als Kalibriermuster ausgebildet ist oder ein Kalibriermuster umfasst, wobei das Kalibriermuster als strukturierte Schicht ausgebildet ist. Insbesondere ist das Kalibriermuster als mittels einer Elektronenstrahllithographie hergestellte strukturierte Schicht ausgebildet. Die strukturierte Schicht kann insbesondere aus einem Elektronenstrahl-empfindlichen Material bestehen. Das Kalibriermuster kann hierbei vorbekannte Abmaße im Nanometerbereich aufweisen, wobei ein Positionsfehler des Kalibriermusters kleiner als 20 Nanometer sein kann. Auch kann das Kalibriermuster zusätzlich mit einer so genannten Maskenregistratureinrichtung vermessen werden. Dies ermöglicht eine Bestimmung von Abmaßen im Nanometerbereich mit einer Messunsicherheit im Bereich von einzelnen Zehntel Nanometern.

Beispielsweise kann das Kalibriermuster erhabene und/oder eingelassene Bereiche in Bezug auf z.B. einen Oberflächenabschnitt des Kalibrierelements oder der Haltevorrichtung oder eine Referenzoberfläche des Kalibriermusters aufweisen, wobei Abmaße dieser Bereiche vorbekannt sind.

Das Kalibriermuster kann somit in vorteilhafter Weise zur Kalibrierung insbesondere eines optischen Sensors genutzt werden. Allerdings ist zu beachten, dass derartige Kalibriermuster in der Regel ausschließlich eine Kalibrierung für eine zweidimensionale und keine dreidimensionale Vermessung ermöglichen, da Tiefeninformationen, insbesondere eine Höhe der erhabenen oder eingelassenen Bereiche, nicht bekannt oder erfassbar sind.

In vorteilhafter Weise ergibt sich, dass Methoden der rigorosen optischen Simulation für annähernd planare Kalibriermuster bekannt sind, z.B. in Form von Stegbreiten-Messungen. Dies ermöglicht somit eine genaue Simulation einer Abbildung des Kalibriermusters durch einen optischen Sensor und somit die vorhergehend bereits erläuterte Kompensation von Abbildungseffekten, die bei der tatsächlichen optischen Erfassung auftreten und die die optische Vermessung erschweren.

Weiter kann das Kalibriermuster mindestens eine Öffnung aufweisen, wobei ein maximaler Durchmesser der Öffnung kleiner als eine Auflösungsgrenze einer optischen Erfassungseinrichtung bzw. eines optischen Sensors des Koordinatenmessgeräts ist.

Hierdurch kann in vorteilhafter Weise eine Prüfung der Bilderfassungseinrichtung und dieser gegebenenfalls zugeordneten weiteren optischen Elemente, wie z.B. einer Linse, erfolgen. Beispielsweise können sogenannten Phase-Retrieval-Methoden aus Fokusserien Abbildungsfehler der optischen Erfassungseinrichtung ermittelt werden. Derartige Methoden sind beispielsweise in der H. Gross et al., Characterization of Complex Optical Systems Based on Wavefront Retrieval from Point Spread Function, Proc. EOS Topical Meeting, Lille, 2007 bekannt.

Weiter kann die Vorrichtung mindestens zwei Abschnitte mit voneinander verschiedenen thermischen Ausdehnungskoeffizienten umfassen, wobei die Abschnitte derart ausgebildet sind, dass eine Differenz von vorbestimmten geometrischen Abmaßen dieser Abschnitte eindeutig einer Temperatur zugeordnet ist. Beispielsweise können die Abschnitte bei einer Referenztemperatur, beispielsweise 20°C, zumindest ein gleiches korrespondierendes geometrisches Abmaß, z.B. eine Länge, aufweisen. Steigt oder sinkt die Temperatur über/unter die Referenztemperatur, so verändert sich dieses geometrische Abmaß in Abhängigkeit des abschnittsspezifischen Ausdehnungskoeffizienten. Die Differenz zwischen den geometrischen Abmaßen repräsentiert hierbei eindeutig die entsprechende Temperaturdifferenz zur Referenztemperatur und somit auch die absolute Temperatur.

Dies ermöglicht in vorteilhafter Weise die Bestimmung einer Temperatur der vorgeschlagenen Vorrichtung durch die Bestimmung der entsprechenden Abmaße. Weiter vorgeschlagen wird ein Verfahren zur Kalibrierung eines Koordinatenmessgeräts, insbesondere eines Multifunktions-Koordinatenmessgeräts, welches sowohl eine optische als auch eine taktile Vermessung ermöglicht. Hierbei wird mindestens eine Vorrichtung nach einer der vorhergehend erläuterten Ausführungsformen in einem Messvolumen oder Messbereich eines optischen und/oder taktilen Sensors des Koordinatenmessgeräts angeordnet. Weiter wird die mindestens eine Vorrichtung mittels des Sensors des Koordinatenmessgeräts vermessen. Dies bedeutet, dass geometrische Abmaße der Vorrichtung, insbesondere des mindestens einen Kalibrierelements, bestimmt werden. Dies kann beispielsweise durch die vorhergehend erläuterte Abtastung mittels eines taktilen Sensors und/oder durch eine optische Vermessung mittels des vorhergehend erläuterten optischen Sensors bzw. der optischen Erfassungseinrichtung erfolgen.

Weiter wird mindestens ein das Messergebnis beeinflussender Parameter in Abhängigkeit des Messergebnisses und in Abhängigkeit von vorbekannten Abmessungen der Vorrichtung bestimmt.

Bezüglich der optischen Vermessung durch eine optische Erfassungseinrichtung können beispielsweise Parameter von Methoden der Bildverarbeitung, die zur Bestimmung von bildbasierten geometrischen Abmaßen genutzt werden, bestimmt werden. Beispielsweise können Parameter von Methoden zur Kantendetektion bestimmt werden. Auch kann ein Umrechnungsfaktor zwischen einem bildbasierten geometrischen Abmaß und einem tatsächlichen Abmaß bestimmt werden.

Gleiches gilt selbstverständlich für die Kalibrierung eines taktilen Sensors.

In einer weiteren Ausführungsform wird die Vorrichtung optisch vermessen. Dies bedeutet, dass Abbilder der Vorrichtung erzeugt und bildbasiert Merkmale der Vorrichtung bestimmt werden, wobei in Abhängigkeit der Merkmale bildbasiert geometrische Abmaße der Vorrichtung bestimmt und mit den vorbekannten Abmaßen verglichen werden.

Auch kann ein virtuelles Abbild der Vorrichtung in Abhängigkeit von physikalisch-optischen Eigenschaften der Vorrichtung erzeugt werden, beispielsweise durch die vorhergehend erläuterte rigorose optische Simulation. Aus einem Vergleich des tatsächlichen Abbildes, welches mittels der optischen Erfassungseinrichtung erzeugt wurde, und dem virtuellen Abbild kann dann eine Unsicherheit einer optischen Vermessung bestimmt werden. Diese kann nachfolgend zur Korrektur bei einer optischen Vermessung genutzt werden oder zur Abschätzung eines Unsicherheitsintervalls bei der optischen Bestimmung von geometrischen Abmaßen.

In einer weiteren Ausführungsform wird die Vorrichtung taktil vermessen. Beispielsweise kann das mindestens eine Kalibrierelement taktil vermessen werden. Hierbei kann z.B. festgestellt werden, ob die Vorrichtung tatsächlich die vorbekannten und somit zu erwartenden Abmaße aufweist. Die taktile Vermessung kann insbesondere einer Verifikation von Abmaßen der Vorrichtung dienen, die dann, wie vorhergehend erläutert, optisch vermessen wird und von der ein virtuelles Abbild erzeugt wird.

Weiter kann eine Differenz von vorbestimmten geometrischen Abmaßen von mindestens zwei Abschnitten der Vorrichtung mit voneinander verschiedenen thermischen Ausdehnungskoeffizienten bestimmt werden, wobei in Abhängigkeit der Differenz eine Temperatur der Vorrichtung bestimmt wird. Dies ermöglicht in vorteilhafter Weise die Bestimmung einer Temperatur der Vorrichtung.

Die Erfindung wird anhand eines Ausführungsbeispiels näher erläutert. Die Figuren zeigen:
- Fig. 1: eine perspektivische Ansicht einer erfindungsgemäßen Vorrichtung,
- Fig. 2: eine Draufsicht auf die in Fig. 1 dargestellte Vorrichtung,
- Fig. 3: einen Längsschnitt durch die in Fig. 1 dargestellte Vorrichtung,
- Fig. 4a: eine perspektivische Ansicht eines Kalibrierelements,
- Fig. 4b: ein schematischer Kantenverlauf des in Fig. 4a dargestellten Kalibrierelements,
- Fig. 5: einen schematischen Querschnitt durch ein Kalibrierelement,
- Fig. 6: einen schematischen Querschnitt durch ein Kalibrierelement und einen korrespondierenden Intensitätsverlauf in einem Hellfeld-Auflicht-Beleuchtungsszenario,
- Fig. 7: einen schematischen Querschnitt durch ein Kalibrierelement und einen korrespondierenden Intensitätsverlauf in einem Hellfeld-Durchlicht-Beleuchtungsszenario und
- Fig. 8: einen schematischen Querschnitt durch ein Kalibrierelement und einen korrespondierenden Intensitätsverlauf in einem Dunkelfeld-Auflicht-Beleuchtungsszenario.

Nachfolgend bezeichnen gleiche Bezugszeichen Elemente mit gleichen oder ähnlichen technischen Merkmalen.

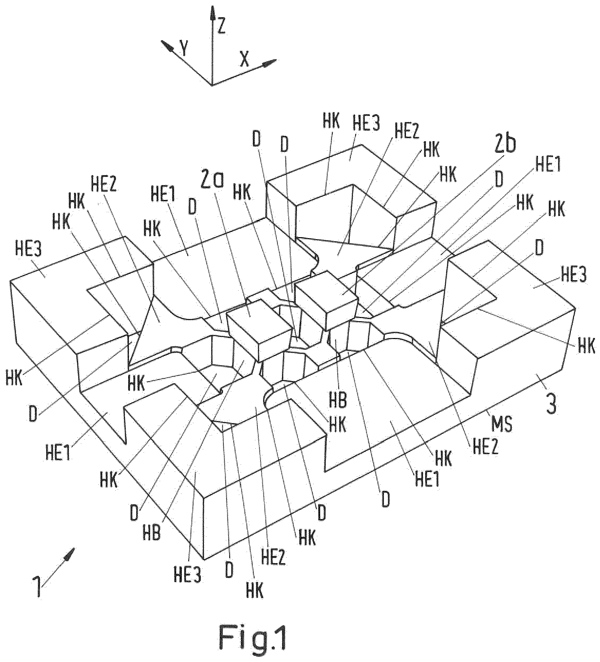

In Fig. 1 ist eine perspektivische Ansicht einer erfindungsgemäßen Vorrichtung 1 dargestellt. Die Vorrichtung 1 umfasst ein erstes Kalibrierelement 2a und ein zweites Kalibrierelement 2b. Weiter umfasst die Vorrichtung 1 eine Haltevorrichtung 3.

Auch dargestellt ist ein Koordinatensystem, auf welches nachfolgend Bezug genommen wird. So ist eine erste horizontale Richtung x und eine dazu orthogonale weitere horizontale Richtung y dargestellt. Orthogonal zu diesen beiden horizontalen Richtungen x, y ist eine vertikale Richtung z dargestellt. Die Richtungen x, y, z bilden ein kartesisches Koordinatensystem.

Die Haltevorrichtung weist mehrere zueinander parallele ebene Oberflächenabschnitte HE1, HE2, HE3 auf. Diese Oberflächenabschnitte HE1, HE2, HE3 sind in vertikaler Richtung z voneinander mit einem vorbekannten Abstand beabstandet. Die vertikale Richtung z ist hierbei orthogonal zu allen diesen ebenen Oberflächenabschnitten HE1, HE2, HE3 orientiert. Somit entspricht die vertikale Richtung z einem Normalenvektor der Oberflächenabschnitte HE1, HE2, HE3 der Haltevorrichtung 3.

So ist entlang der vertikalen Richtung z ein erster Oberflächenabschnitt HE1 unterhalb eines zweiten Oberflächenabschnitts HE2 der Haltevorrichtung 3 angeordnet, wobei der zweite Oberflächenabschnitt HE2 wiederum unterhalb eines dritten Oberflächenabschnitts HE3 angeordnet ist.

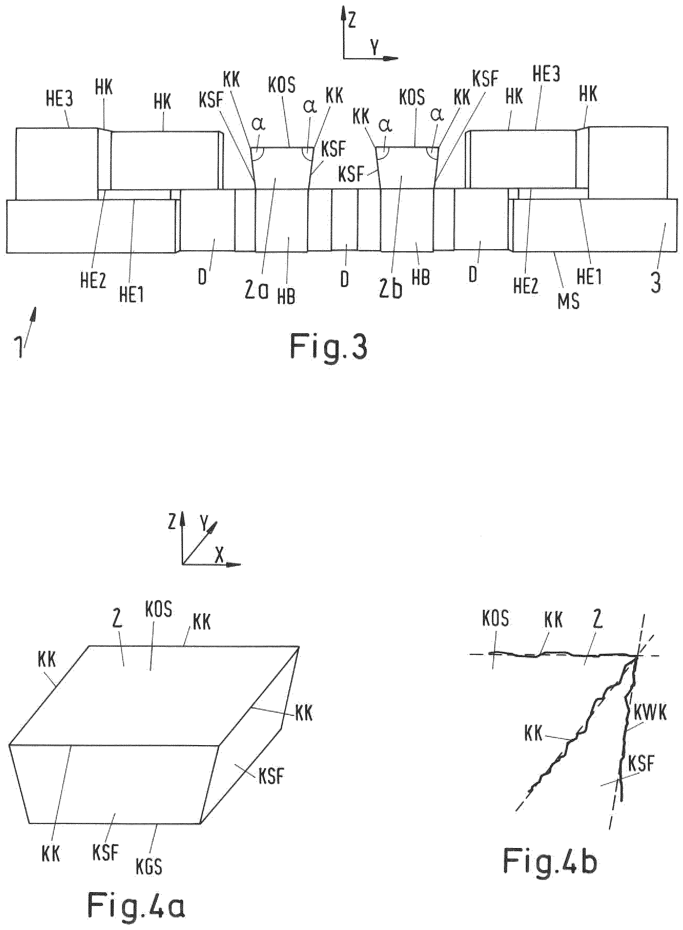

Auf dem zweiten Oberflächenabschnitt HE2 sind die Kalibrierelemente 2a, 2b angeordnet. Hierbei liegt eine Grundseite KGS (siehe z.B. Fig. 4a) der jeweiligen Kalibrierelemente 2a, 2b auf dem zweiten Oberflächenabschnitt HE2 der Haltevorrichtung 3 auf.

Die Kalibrierelemente 2a, 2b sind pyramidenstumpfförmig ausgebildet, wobei der Pyramidenstumpf eine rechteckige Grundfläche aufweist. Hierbei sind die Kalibrierelemente 2a, 2b derart auf der Haltevorrichtung 3 angeordnet, dass sich ein Querschnitt der Kalibrierelemente 2a, 2b in vertikaler Richtung z vergrößert.

Ein sich entlang der vertikalen Richtung z verändernder Abstand entlang der ersten horizontalen Richtung x zwischen den beiden Kalibrierelementen 2a, 2b, insbesondere zwischen einander zugewandten Seitenflächen KSF der Kalibrierelemente 2a, 2b, ist vorbekannt.

Die Haltevorrichtung 3 weist mehrere Durchgangsöffnungen D auf. Diese Durchgangsöffnungen D erstrecken sich hierbei in vertikaler Richtung z von einer Unterseite MS der Haltevorrichtung 3 bis hin zu einer Oberseite, die durch die ebenen Oberflächenabschnitte HE1, HE2, HE3 der Haltevorrichtung 3 gebildet wird.

Die Haltevorrichtung 3 weist mehrere Kanten HK auf. Diese Kanten HK ergeben sich jeweils als Schnittlinien nichtgekrümmter Ebenen, wobei die sich schneidenden Ebenen nicht senkrecht aufeinander stehen. Insbesondere schließen die ebenen Oberflächenabschnitte der Haltevorrichtung 3, die die Kanten HK ausbilden, einen spitzen Winkel miteinander ein. Einige der Kanten HK begrenzen hierbei eine Durchgangsöffnung D der Haltevorrichtung 3.

In Fig. 1 ist weiter dargestellt, dass sich ein Teil der Kalibrierelemente 2a, 2b über jeweils insgesamt vier Durchgangsöffnungen D der Haltevorrichtung 3 erstreckt. Dies bedeutet, dass in einer gemeinsamen Projektionsebene (nicht dargestellt), die orthogonal zur vertikalen Richtung z angeordnet ist, ein Teil des jeweiligen Kalibrierelements 2a, 2b innerhalb der Durchgangsöffnung D angeordnet ist. Weiter sind die Kalibrierelemente 2a, 2b in vertikaler Richtung z über den Durchgangsöffnungen D angeordnet.

In einem Durchlicht-Beleuchtungsszenario kann die Vorrichtung 1 von der Unterseite MS der Haltevorrichtung 3 her beleuchtet werden. Hierbei kann Licht durch die Durchgangsöffnung D strahlen. Eine Bildebene (nicht dargestellt) einer optischen Erfassungseinrichtung eines Koordinatenmessgerätes kann auf einer der Oberseite der Vorrichtung 1 zugewandten Seite angeordnet sein, und insbesondere auch orthogonal zur vertikalen Richtung z orientiert sein. Die Durchgangsöffnung D und die Anordnung der Kalibrierelemente 2a, 2b über den Durchgangsöffnungen D ermöglicht die Abbildung von Kanten KK der Kalibrierelemente 2a, 2b (hier z.B. Fig. 4a) in die vorhergehend erläuterte Bildebene.

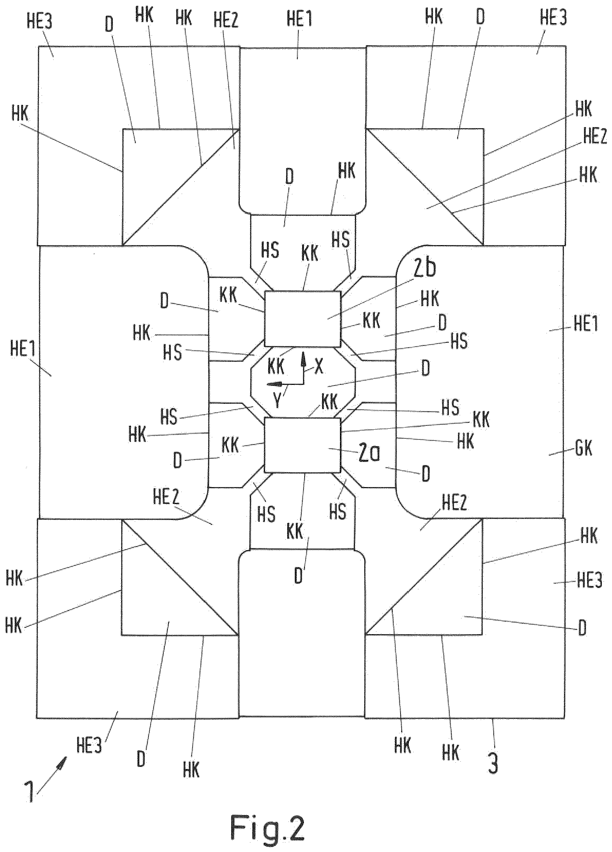

Weiter dargestellt sind Halteblöcke HB, die in Bezug auf Fig. 2 näher erläutert werden.

In Fig. 2 ist eine Draufsicht auf die in Fig. 1 dargestellte Vorrichtung 1 dargestellt. Hierin ist ersichtlich, dass die Haltevorrichtung 3 Haltestege HS aufweist, die einen Grundkörper GK der Haltevorrichtung 3 mit Halteblöcken HB (siehe Fig. 1) verbinden. Die Haltestege HS sind freigeschnittene Haltestege HS, die beidseitig von Durchgangsöffnungen D umgeben sind. Somit schließen der Grundkörper GK, die Haltestege HS und die Halteblöcke HB Durchgangsöffnungen D der Haltevorrichtung 3 vollständig ein.

Weiter ist dargestellt, dass Ecken der Kalibrierelemente 2a, 2b, die von Kanten KK der Kalibrierelemente 2a, 2b gebildet werden, über den Haltestegen HS angeordnet sind. Diese Ecken sind somit in dem vorhergehend erläuterten Durchlicht-Beleuchtungsszenario nicht in die Bildebene abbildbar.

Es ist jedoch auch vorstellbar, dass die Haltestege HS derart angeordnet sind, dass ausschließlich ein Teilabschnitt einer Kante KK und keine Ecke über einem Haltesteg HS angeordnet ist. Somit kann erreicht werden, dass die Ecken im Durchlicht-Beleuchtungsszenario in die Bildebene abgebildet werden können.

In Fig. 3 ist ein Längsschnitt durch die in Fig. 1 dargestellte Vorrichtung 1 dargestellt. Hierin ist insbesondere dargestellt, dass sich in vertikaler Richtung z obere Kanten KK der Kalibrierelemente 2a, 2b als Schnittlinien zweier ebener Oberflächenabschnitte der Kalibrierelemente 2a, 2b ergeben, die sich unter einem spitzen Winkel α schneiden. Wird Licht z.B. mit einer Strahlrichtung parallel zur vertikalen Richtung z auf die Vorrichtung 1 gestrahlt oder von der Unterseite MS der Vorrichtung 1 her durch die Vorrichtung 1 gestrahlt, so werden diese Kanten KK eindeutig in eine Bildebene, die orthogonal zur vertikalen Richtung z orientiert sein kann, abgebildet und überlagern sich mit keinen weiteren Kanten KK der Vorrichtung 1. Entsprechendes gilt für die Kanten HK der Haltevorrichtung 3. Die in Fig. 3 dargestellten Kanten KK der Kalibrierelemente 2a, 2b werden von einer Oberseite KOS des jeweiligen Kalibrierelements 2a, 2b und von Seitenflächen KSF der Kalibrierelemente 2a, 2b gebildet. Hierbei bilden die Oberseite KOS und die Seitenflächen KSF jeweils ebene Oberflächenabschnitte der Kalibrierelemente 2a, 2b aus. Die Schnittwinkel α, unter denen sich die Oberseiten KOS und die Seitenflächen KSF schneiden, liegen in einem Winkelbereich von 80° bis kleiner 90°.

In Fig. 4a ist eine perspektivische Ansicht eines Kalibrierelements 2 dargestellt. Das Kalibrierelement ist pyramidenstumpfförmig ausgebildet und weist eine Grundseite KGS, eine Oberseite KOS und Seitenflächen KSF auf. Die Seiten sind hierbei als ebene Oberflächenabschnitte des Kalibrierelements 2 ausgebildet. Dargestellt ist, dass die Seitenflächen KSF in Bezug auf die Oberseite KOS und die Grundseite KGS geneigt sind. Hierbei schneiden die Seitenflächen KSF die Oberseite KOS jeweils unter einem spitzen Winkel α und bilden Kanten KK des Kalibrierelements 2 aus. Somit ergeben sich die Kanten KK als Schnittlinien zweier Ebenen, die nicht orthogonal zueinander orientiert sind.

Das in Fig. 4a dargestellte Kalibrierelemente 2 weist vorbekannte physikalisch-optische Eigenschaften auf, die eine Berechnung von Wechselwirkungen des Kalibrierelements 2 mit Licht ermöglichen. Vorzugsweise ist das Kalibrierelement 2 aus Diamant gebildet, welches ein isotropes, nicht-leitfähiges Material bildet. Gleichzeitig weist das aus Diamant ausgebildete Kalibrierelement 2 eine hohe mechanische Härte, eine hohe mechanische Festigkeit und eine hohe mechanische Verschleißfestigkeit auf. Gleichfalls weist das aus Diamant ausgebildete Kalibrierelement 2 einen geringen thermischen Ausdehnungskoeffizienten aus.

Die Haltevorrichtung 3 kann ebenfalls aus Diamant ausgebildet sein. Vorzugsweise besteht die Haltevorrichtung 3 jedoch aus Hartmetall oder aus Keramik.

In Fig. 4b ist schematisch ein tatsächlicher Verlauf von Kanten KK des in Fig. 4a dargestellten Kalibrierelements 2 sowie ein bildbasiert bestimmbarer Verlauf der Kanten KK dargestellt.

Der tatsächliche Verlauf der Kanten KK und einer von Seitenflächen KSF gebildeten weiteren Kante KWK sind durch durchgezogene Linien dargestellt. Wird das Kalibrierelement 2 durch eine optische Erfassungseinrichtung eines Koordinatenmessgeräts abgebildet, so kann beispielsweise der durch die durchgezogenen Linien dargestellte Verlauf der Kanten KK, KWK bildbasiert bestimmt werden. Durch Strichlinien ist in Fig. 4b ein bildbasiert bestimmbarer idealer Verlauf der Kanten KK, KWK dargestellt. Der ideale Verlauf kann beispielsweise als Ausgleichsgerade bezogen auf den tatsächlichen Verlauf der Kanten KK bestimmt werden.

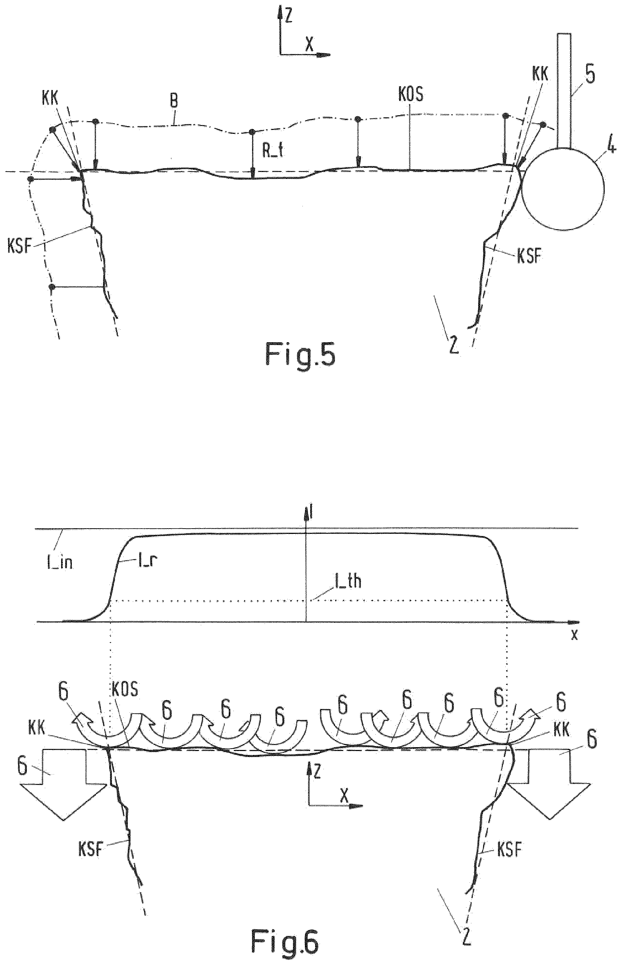

In Fig. 5 ist ein schematischer Längsschnitt durch ein Kalibrierelement 2 dargestellt, wobei insbesondere eine Oberseite KOS und Seitenflächen KSF des Kalibrierelements 2 dargestellt sind. Weiter dargestellt sind Kanten KK, die von Seitenflächen KSF und der Oberseite KOS gebildet werden. Eine durchgezogene Linie stellt einen tatsächlichen Verlauf bzw. eine tatsächliche Topographie der Oberseite KOS und der Seitenflächen KSF dar. Dabei ist dargestellt, dass diese nicht vollständig eben ausgebildet sind.

Weiter dargestellt ist eine Tastkugel 4, die an einem freien Ende eines Taststiftes 5 befestigt ist. Der Taststift 5 wiederum kann an einem Tastkopf (nicht dargestellt) eines Koordinatenmessgeräts befestigt sein. Die Tastkugel 4 und der Taststift 5 bilden hierbei einen taktilen Sensor zur Vermessung des Kalibrierelements 2 aus. Dargestellt ist eine Bahn B, entlang derer sich ein Mittelpunkt der Tastkugel 4 bei der Abtastung der Oberseite KOS und der Seitenflächen KSF bewegt. Die Bahn B ist hierbei um einen Radius R_t von der Oberseite KOS oder der Seitenfläche KSF jeweils in Richtung eines Normalenvektors auf der Oberfläche KOS bzw. der Seitenfläche KSF versetzt. In Abhängigkeit der Positionen des Mittelpunkts der Tastkugel 4 entlang der Bahn B kann dann die Topographie des Kalibrierelements 2 bestimmt werden. Durch Strichlinien dargestellt ist ein idealer Verlauf der Oberseite KOS bzw. der Seitenflächen KSF, die in Abhängigkeit der Messpunkte entlang der Bahn B bestimmt werden können.

Somit kann das Kalibrierelement 2 sowohl zur optischen als auch zur taktilen Vermessung genutzt werden, wodurch in vorteilhafter Weise ein Multifunktions-Koordinatenmessgerät mittels des Kalibrierelements 2 kalibriert werden kann.

In Fig. 6 ist ein schematischer Querschnitt durch ein Kalibrierelement 2 sowie ein Intensitätsverlauf I entlang der ersten horizontalen Richtung x in einem Hellfeld-Auflichtverhältnis dargestellt. Hierbei strahlt Licht 6 von einer Oberseite KOS her auf das Kalibrierelement 2. Teile des Lichts 6 werden hierbei reflektiert, was durch gekrümmte Pfeile dargestellt ist. Die reflektierten Anteile des Lichts 6 können von einer optischen Erfassungseinrichtung erfasst und z.B. auf einen Bildsensor, der eine Bildebene ausbilden kann, abgebildet werden.

Weiter dargestellt ist ein exemplarischer Intensitätsverlauf des mittels des Bildsensors erfassten Lichts 6 entlang der ersten horizontalen Richtung x. Dargestellt ist eine erste Lichtintensität I_in, die eine Intensität des aufgestrahlten Lichts 6 darstellt. Weiter dargestellt ist ein Intensitätsverlauf I_r, welches die Intensität des reflektierten Lichts darstellt. Hierbei ist ersichtlich, dass im Bereich der Kanten KK, die von der Oberseite KOS und den Seitenflächen KSF ausgebildet werden, die Intensität I_r des reflektierten Lichts 6 ansteigt und im Bereich des Kalibrierelements 2 einen höheren Wert als außerhalb des Kalibrierelements 2 annimmt. Weiter dargestellt ist eine Intensitätsschwelle I_th, wobei in dem Hellfeld-Auflicht-Beleuchtungsszenario die Kanten KK bzw. die Lagen der Kanten KK bildbasiert detektiert werden, falls die Intensität I_r des reflektierten Lichts 6 die Intensitätsschwelle I_th schneidet.

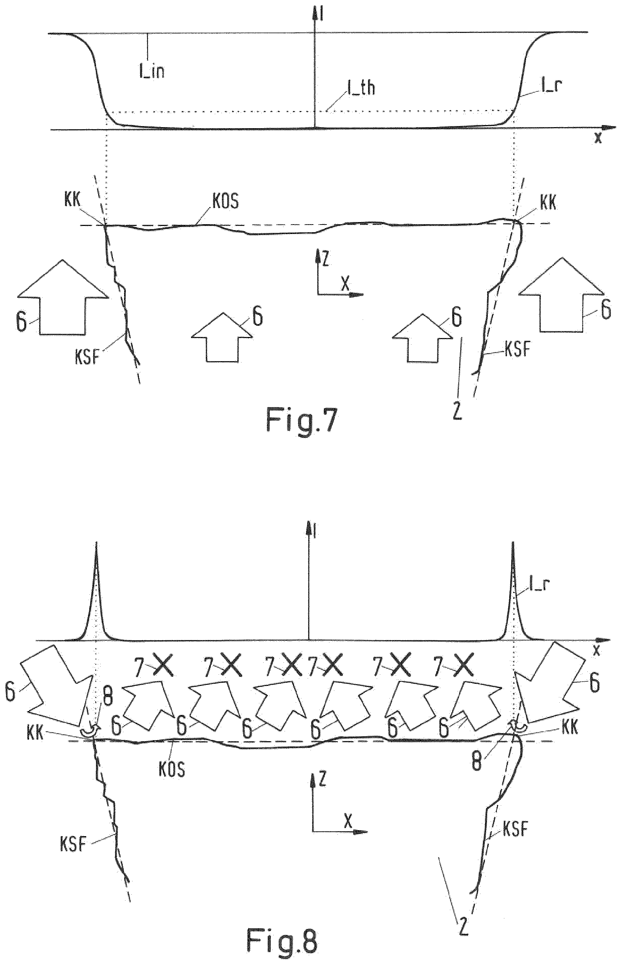

In Fig. 7 ist ein schematischer Querschnitt durch ein Kalibrierelement 2 in einem Hellfeld-Durchlicht-Beleuchtungsszenario sowie ein korrespondierender Intensitätsverlauf in der ersten horizontalen Richtung x dargestellt. Licht 6 strahlt hierbei von einer Unterseite des Kalibrierelements 2, also von der in Fig. 4a dargestellten Grundseite KGS des Kalibrierelements 2 her durch das Kalibrierelement 2 hindurch und an dem Kalibrierelement 2 vorbei.

Hierbei ist dargestellt, dass eine Strahlrichtung des Lichts 6 parallel zur vertikalen Richtung z orientiert ist.

Weiter dargestellt ist ein Intensitätsverlauf I in der ersten horizontalen Richtung x, der beispielsweise von einem Bildsensor (nicht dargestellt) einer optischen Erfassungseinrichtung erzeugt wird, wobei die optische Erfassungseinrichtung ein Abbild des Kalibrierelements 2 in dem Hellfeld-Durchlicht-Beleuchtungsszenario erzeugt.

Dargestellt ist eine Intensität I_in des eingestrahlten Durchlichts. Weiter dargestellt ist ein Intensitätsverlauf I_r, der von dem Bildsensor erzeugt wird. Ebenfalls dargestellt ist eine Intensitätsschwelle I_th zur Kantendetektion. Hierbei ist ersichtlich, dass im Bereich der Kanten KK, die von der Oberseite KOS und den Seitenflächen KSF des Kalibrierelements 2 gebildet werden, die Intensität I_r von der eingestrahlten Intensität I_in auf einen Wert unterhalb der Intensitätsschwelle I_th abfällt und im Bereich des Kalibrierelements 2 einen niedrigeren Wert als außerhalb des Kalibierelements 2 aufweist. Bildbasierte kann eine Lage der Kante KK dann in Abhängigkeit des Schnittpunktes der Intensitätsschwelle I_th mit dem Intensitätsverlauf I_r bestimmt werden.

In Fig. 8 ist ein schematischer Querschnitt durch ein Kalibrierelement 2 in einem Dunkelfeld-Auflicht-Beleuchtungsszenario sowie ein entsprechender Intensitätsverlauf in der ersten horizontalen Richtung x dargestellt. Hierbei wird Licht 6 von einer Oberseite KOS des Kalibrierelements 2 her derart auf das Kalibrierelement 2 aufgestrahlt, dass keine direkte Reflexion erfolgt. Ein Bildsensor einer optischen Erfassungseinrichtung erfasst in diesem Fall ausschließlich Streulicht 8, welches von dem Kalibrierelement 2 gestreut wird.

Dies ist schematisch durch Kreuze 7 dargestellt, die verdeutlichen, dass eine direkte Reflexion von Licht 6 nicht erfolgt.

Im korrespondierenden Intensitätsverlauf I_r des Streulichts 8 entlang der ersten horizontalen Richtung x ist ersichtlich, dass im Bereich der Kanten KK, die von der Oberseite KOS und den Seitenflächen KSF des Kalibrierelements 2 gebildet werden, Intensitätsspitzen auftreten. Somit weist der Intensitätsverlauf I_r im Bereich einer Kante KK ein Intensitätsmaximum auf, wodurch die Lage der Kante KK bildbasiert einfach und zuverlässig detektiert werden kann.

## Patentansprüche

1. Vorrichtung zur Kalibrierung eines Koordinatenmessgeräts,
wobei die Vorrichtung (1) mindestens ein Kalibrierelement (2, 2a, 2b) umfasst, wobei das Kalibrierelement (2, 2a, 2b) mehrere Oberflächenabschnitte aufweist, wobei aneinander anstoßende Oberflächenabschnitte eine Kante (KK) ausbilden, wobei die Vorrichtung (1) mindestens eine Haltevorrichtung (3) umfasst, wobei das Kalibrierelement (2, 2a, 2b) auf einem Oberflächenabschnitt (HE2) der Haltevorrichtung (3) angeordnet ist,
wobei die Oberflächenabschnitte des Kalibrierelements (2, 2a, 2b) derart zueinander angeordnet sind, dass das Kalibrierelement (2, 2a, 2b) mindestens eine Kante (KK) aufweist, welche sich mit keiner weiteren Kante (KK) des Kalibrierelements (2, 2a, 2b) überlagert, wenn die Kanten (KK) in eine gemeinsame Projektionsebene projiziert werden, wobei die Projektionsebene orthogonal zu einem Normalenvektor des Oberflächenabschnitts (HE2) der Haltevorrichtung (3) orientiert ist,
**dadurch gekennzeichnet, dass**
die Haltevorrichtung (3) mindestens eine Öffnung (D) aufweist, welche hin zu einer Oberseite und hin zu einer Unterseite der Haltevorrichtung (3) geöffnet ist, wobei das mindestens eine Kalibrierelement (2, 2a, 2b) zumindest teilweise über der Öffnung (D) angeordnet ist.

2. Vorrichtung nach Anspruch 1, **dadurch gekennzeichnet, dass** sich zwei voneinander verschiedene Oberflächenabschnitte unter einem spitzen Winkel (α) schneiden.

3. Vorrichtung nach Anspruch 2, **dadurch gekennzeichnet, dass** der spitze Winkel (α) in einem Winkelbereich von 0° bis kleiner 90° liegt.

4. Vorrichtung nach einem der Ansprüche 1 bis 3, **dadurch gekennzeichnet, dass** das Kalibrierelement (2, 2a, 2b) pyramidenstumpfförmig ausgebildet ist.

5. Vorrichtung nach einem der Ansprüche 1 bis 4, **dadurch gekennzeichnet, dass** die Haltevorrichtung (3) mehrere Öffnungen (D) aufweist, wobei das mindestens eine Kalibrierelement (2, 2a, 2b) zumindest teilweise über mehr als einer der Öffnungen (D) angeordnet ist.

6. Vorrichtung nach einem der Ansprüche 1 bis 5, **dadurch gekennzeichnet, dass** die Haltevorrichtung (3) einen Grundkörper (GK) und mindestens einen Halteblock (HB) aufweist, wobei der Halteblock (HB) über mindestens einen freigeschnittenen Haltesteg (HS) mit dem Grundkörper (GK) verbunden ist.

7. Vorrichtung nach Anspruch 6, **dadurch gekennzeichnet, dass** eine Ecke oder eine Kante (KK) des Kalibrierelements (2, 2a, 2b) über dem mindestens einen Haltesteg (HS) angeordnet ist.

8. Vorrichtung nach einem der Ansprüche 1 bis 7, **dadurch gekennzeichnet, dass** die Haltevorrichtung (3) mindestens eine Kante (HK) aufweist, wobei sich die Kante (HK) in der gemeinsamen Projektionsebene mit keiner weiteren Kante (HK) der Haltevorrichtung (3) überlagert.

9. Vorrichtung nach einem der Ansprüche 1 bis 8, **dadurch gekennzeichnet, dass** die Haltevorrichtung (3) mehrere zueinander parallele, ebene Oberflächenabschnitte (HE1, HE2, HE3) aufweist, die entlang des Normalenvektors beabstandet zueinander angeordnet sind.

10. Vorrichtung nach einem der Ansprüche 1 bis 9, **dadurch gekennzeichnet, dass** die Vorrichtung (1) mindestens ein zweites Kalibrierelement (2b) umfasst.

11. Vorrichtung nach einem der Ansprüche 1 bis 10, **dadurch gekennzeichnet, dass** die Vorrichtung (1) mindestens zwei Abschnitte mit voneinander verschiedenen thermischen Ausdehnungskoeffizienten umfasst, wobei die Abschnitte derart ausgebildet sind, dass eine Differenz von vorbestimmten geometrischen Abmaßen eindeutig einer Temperatur zugeordnet ist.

12. Verfahren zur Kalibrierung eines Koordinatenmessgeräts, wobei
- mindestens eine Vorrichtung (1) nach einem der Ansprüche 1 bis 11 in einem Messvolumen eines Sensors des Koordinatenmessgeräts angeordnet wird,
- die mindestens eine Vorrichtung (1) mittels des Sensors des Koordinatenmessgeräts vermessen wird,
- mindestens ein das Messergebnis beeinflussender Parameter in Abhängigkeit des Messergebnisses und vorbekannter Abmaße der Vorrichtung (1) bestimmt wird.

13. Verfahren nach Anspruch 12, **dadurch gekennzeichnet, dass** die Vorrichtung (1) optisch vermessen wird.

14. Verfahren nach Anspruch 13, **dadurch gekennzeichnet, dass** ein virtuelles Abbild der Vorrichtung (1) in Abhängigkeit von den optischen Eigenschaften der Vorrichtung (1) berechnet wird, wobei das virtuelle Abbild mit einem korrespondierenden Abbild der Vorrichtung (1), welches durch eine optische Erfassungseinrichtung des Koordinatenmessgeräts erzeugt wurde, verglichen wird, wobei in Abhängigkeit des Vergleichs eine Ungenauigkeit der optischen Vermessung bestimmt wird.

15. Verfahren nach einem der Ansprüche 12 bis 14, **dadurch gekennzeichnet, dass** die Vorrichtung (1) taktil vermessen wird.

## Claims

1. Apparatus for calibrating a coordinate-measuring machine,
wherein the apparatus (1) comprises at least one calibration element (2, 2a, 2b),
wherein the calibration element (2, 2a, 2b) has a plurality of surface sections,
wherein mutually abutting surface sections form an edge (KK),
wherein
the apparatus (1) has at least one retaining apparatus (3), wherein the calibration element (2, 2a, 2b) is arranged on a surface section (HE2) of the retaining apparatus (3),
wherein the surface sections of the calibration element (2, 2a, 2b) are arranged with respect to one another such that the calibration element (2, 2a, 2b) has at least one edge (KK) which does not overlay with any other edge (KK) of the calibration element when the edges (KK) are projected into a common projection plane, wherein the projection plane is oriented orthogonally to a normal vector of the surface section (HE2) of the retaining apparatus (3),
**characterized in that**
the retaining apparatus (3) has at least one opening (D) which is opened towards a top side and towards a bottom side of the retaining apparatus (3), wherein the at least one calibration element (2, 2a, 2b) is arranged at least partially above the opening (D).

2. Apparatus according to Claim 1, **characterized in that** two mutually different surface sections intersect under an acute angle (α).

3. Apparatus according to Claim 2, **characterized in that** the acute angle (α) lies in an angle range of 0° to less than 90°.

4. Apparatus according to one of Claims 1 to 3, **characterized in that** the calibration element (2, 2a, 2b) is configured in the form of a truncated pyramid.

5. Apparatus according to one of Claims 1 to 4, **characterized in that**
the retaining apparatus (3) has a plurality of openings (D), wherein the at least one calibration element (2, 2a, 2b) is arranged at least partially above more than one of the openings (D).

6. Apparatus according to any of Claims 1 to 5, **characterized in that** the retaining apparatus (3) has a base body (GK) and at least one retaining block (HB), wherein the retaining block (HB) is connected to the base body (GK) via at least one retaining web (HS) that is cut free.

7. Apparatus according to Claim 6, **characterized in that** a corner or an edge (KK) of the calibration element (2, 2a, 2b) is arranged above the at least one retaining web (HS).

8. Apparatus according to one of Claims 1 to 7, **characterized in that** the retaining apparatus (3) has at least one edge (HK), wherein the edge (HK) overlays with no other edge (HK) of the retaining apparatus (3) in the common projection plane.

9. Apparatus according to one of Claims 1 to 8, **characterized in that** the retaining apparatus (3) has a plurality of mutually parallel, planar surface sections (HE1, HE2, HE3), which are arranged such that they are spaced apart from one another along the normal vector.

10. Apparatus according to one of Claims 1 to 9, **characterized in that** the apparatus (1) comprises at least one second calibration element (2b).

11. Apparatus according to one of Claims 1 to 10, **characterized in that** the apparatus (1) comprises at least two sections with mutually different coefficients of thermal expansion, wherein the sections are configured such that a difference of predetermined geometric dimensions is uniquely associated with a temperature.

12. Method for calibrating a coordinate-measuring machine, wherein
- at least one apparatus (1) according to one of Claims 1 to 11 is arranged in a measurement volume of a sensor of the coordinate-measuring machine,
- the at least one apparatus (1) is measured using the sensor of the coordinate-measuring machine,
- at least one parameter that influences the measurement result is determined in dependence on the measurement result and previously known dimensions of the apparatus (1).

13. Method according to Claim 12, **characterized in that** the apparatus (1) is measured optically.

14. Method according to Claim 13, **characterized in that** a virtual image of the apparatus (1) is calculated in dependence on the optical properties of the apparatus (1), wherein the virtual image is compared to a corresponding image of the apparatus (1), which was generated by an optical capturing device of the coordinate-measuring machine, wherein an inaccuracy of the optical measurement is determined in dependence on the comparison.

15. Method according to one of Claims 12 to 14, **characterized in that** the apparatus (1) is measured in tactile fashion.

## Revendications

1. Dispositif d'étalonnage d'un appareil de mesure de coordonnées,
dans lequel le dispositif (1) comprend au moins un élément d'étalonnage (2, 2a, 2b),
dans lequel l'élément d'étalonnage (2, 2a, 2b) comporte plusieurs parties de surface,
dans lequel des parties de surface contiguës forment une arête (KK),
dans lequel le dispositif (1) comprend au moins un dispositif de retenue (3), dans lequel l'élément d'étalonnage (2, 2a, 2b) est disposé sur une partie de surface (HE2) du dispositif de retenue (3),
dans lequel les parties de surface de l'élément d'étalonnage (2, 2a, 2b) sont disposées les unes par rapport aux autres de telle manière que l'élément d'étalonnage (2, 2a, 2b) comporte au moins une arête (KK) qui n'est superposée à aucune autre arête (KK) de l'élément d'étalonnage (2, 2a, 2b) lorsque les arêtes (KK) sont projetées dans un plan de projection commun, dans lequel le plan de projection est orienté de manière orthogonale à un vecteur normal de la partie de surface (HE2) du dispositif de retenue (3),
**caractérisé en ce que** le dispositif de retenue (3) comporte au moins une ouverture (D) qui s'ouvre vers une face supérieure et vers une face inférieure du dispositif de retenue (3),
dans lequel le ou les éléments d'étalonnage (2, 2a, 2b) sont disposés au moins en partie au-dessus de l'ouverture (D).

2. Dispositif selon la revendication 1, **caractérisé en ce que** deux parties de surface différentes l'une de l'autre se coupent en formant un angle aigu (α).

3. Dispositif selon la revendication 2, **caractérisé en ce que** l'angle aigu (α) se situe dans la plage angulaire de 0° à moins de 90°.

4. Dispositif selon l'une quelconque des revendications 1 à 3, **caractérisé en ce que** l'élément d'étalonnage (2, 2a, 2b) est réalisé sous la forme d'une pyramide tronquée.

5. Dispositif selon l'une quelconque des revendications 1 à 4, **caractérisé en ce que** le dispositif de retenue (3) comporte plusieurs ouvertures (D), dans lequel le ou les éléments d'étalonnage (2, 2a, 2b) sont disposés au moins partiellement au-dessus de plus de l'une des ouvertures (D).

6. Dispositif selon l'une quelconque des revendications 1 à 5, **caractérisé en ce que** le dispositif de retenue (3) comporte un corps de base (GK) et au moins un bloc de retenue (HB), dans lequel le bloc de retenue (HB) est relié au corps de base (GK) par l'intermédiaire d'au moins une tige de retenue (HS) dégagée.

7. Dispositif selon la revendication 6, **caractérisé en ce qu'**un sommet ou une arête (KK) de l'élément d'étalonnage (2, 2a, 2b) est disposée au-dessus de la ou des tiges de retenue (HS).

8. Dispositif selon l'une quelconque des revendications 1 à 7, **caractérisé en ce que** le dispositif de retenue (3) comporte au moins une arête (HK), dans lequel l'arête (HK) se superpose, dans le plan de projection commun, à une autre arête (HK) du dispositif de retenue (3).

9. Dispositif selon l'une quelconque des revendications 1 à 8, **caractérisé en ce que** le dispositif de retenue (3) comporte plusieurs parties de surface supérieures planes parallèles les unes aux autres (HE1, HE2, HE3), qui sont disposées de manière espacée les unes des autres le long du vecteur normal.

10. Dispositif selon l'une quelconque des revendications 1 à 9, **caractérisé en ce que** le dispositif (1) comprend au moins un deuxième élément d'étalonnage (2b).

11. Dispositif selon l'une quelconque des revendications précédentes 1 à 10, **caractérisé en ce que** le dispositif (1) comprend au moins deux parties ayant des coefficients de dilatation thermique différents les uns des autres, dans lequel les parties sont réalisées de manière à ce qu'une différence entre des dimensions géométriques prédéterminées soit associée de manière unique à une température.

12. Procédé d'étalonnage d'un appareil de mesure de coordonnées, dans lequel
- au moins un dispositif (1) selon l'une quelconque des revendications 1 à 11 est disposé dans un volume de mesure d'un capteur de l'appareil de mesure de coordonnées,
- le ou les dispositifs (1) sont mesurés au moyen du capteur de l'appareil de mesure de coordonnées,
- au moins un paramètre agissant sur le résultat de mesure est déterminé en fonction du résultat de mesure et de dimensions préalablement connues du dispositif (1).

13. Procédé selon la revendication 12, **caractérisé en ce que** le dispositif (1) est mesuré optiquement.

14. Procédé selon la revendication 13, caractérisé en qu'une image virtuelle du dispositif (1) est calculée en fonction des propriétés optiques du dispositif (1), dans lequel l'image virtuelle est comparée à une image correspondante du dispositif (1), qui a été générée par un dispositif de détection optique de l'appareil de mesure de coordonnées,
dans lequel un défaut de précision de la mesure optique est déterminé en fonction de la comparaison.

15. Procédé selon l'une quelconque des revendications 12 à 14, **caractérisé en ce que** le dispositif (1) est mesuré de manière tactile.
